**Europäisches Patentamt**

**European Patent Office**

**Office européen des brevets**

(19)

(11) Numéro de publication: **0 128 088**
**B1**

(12) **FASCICULE DE BREVET EUROPEEN**

(45) Date de publication du fascicule du brevet:
**27.01.88**

(51) Int. Cl.⁴: **B 60 R 9/10**

(21) Numéro de dépôt: **84401106.4**

(22) Date de dépôt: **30.05.84**

(54) Dispositif pour porter des bagages à l'arrière d'un véhicule.

(30) Priorité: **31.05.83 FR 8308973**

(43) Date de publication de la demande:
**12.12.84 Bulletin 84/50**

(45) Mention de la délivrance du brevet:
**27.01.88 Bulletin 88/4**

(84) Etats contractants désignés:
**AT BE DE GB IT LU NL SE**

(56) Documents cités:
**EP - A - 0 037 599**
**WO - A - 82/00119**
**FR - A - 2 383 046**
**FR - A - 2 428 542**
**GB - A - 2 108 450**
**US - A - 4 301 953**
**US - A - 4 380 344**

(73) Titulaire: **Mesnil, Michel, 7, Clos du Perthuis Lebisey,**
**F-14200 Herouville (FR)**

(72) Inventeur: **Mesnil, Michel, 7, Clos du Perthuis Lebisey,**
**F-14200 Herouville (FR)**

ACTORUM AG

## Description

La présente invention se rapporte à un dispositif pour porter des bagages à l'arrière d'un véhicule pourvu d'une ferrure d'attelage et constitué de tubes ou profilés métalliques. (WO-A-8200 119).

Le dispositif conforme à la présente invention permet de porter à l'arrière d'un véhicule, sur un support rigide solidement fixé mais facilement amovible, bagages supplémentaires, vélos ou portique porte barre de toit supplémentaire de porte-bagages de toit. Ce dispositif est caractérisé par la partie caractérisante de la revendication 1.

Par l'intermédiaire d'une entretoise de conception particulière, ce dispositif offre l'avantage d'une fixation rigide et sûre utilisant la force de la ferrure d'attelage, dont est préalablement muni le véhicule, et celui d'une mise en place et d'un retrait instantanés sans utilisation d'outillage.

La figure 1 représente l'ensemble du dispositif.
Le figure 2 représente le dispositif mis en place sur une ferrure d'attelage.

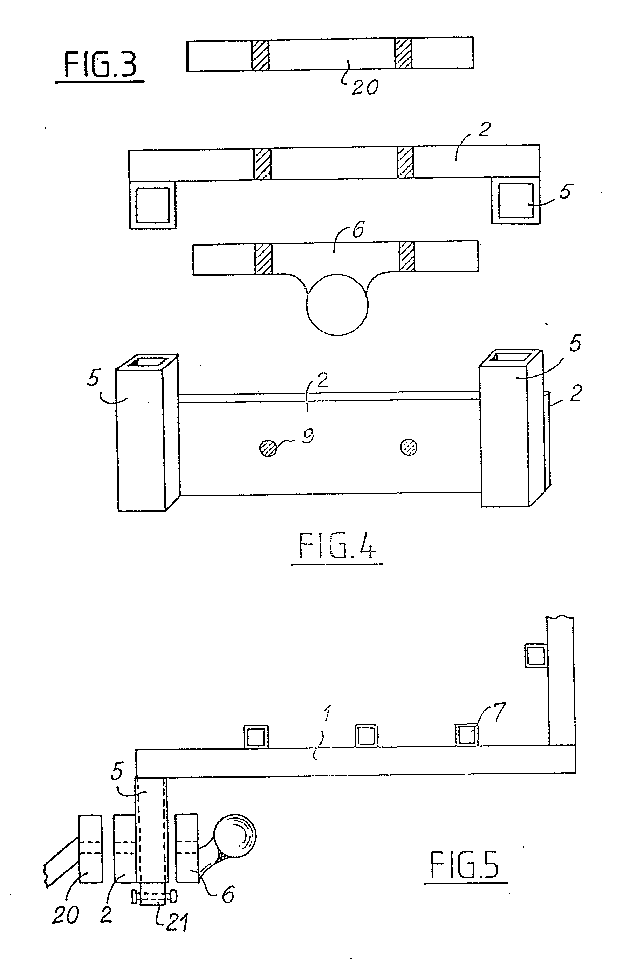

La figure 3 représente, vue de dessus, l'entretoise se plaçant entre la plaque d'attelage et l'équerre porte-boule.
La figure 4 représente, vue de face et en perspective, l'entretoise avec ses tubes soudés dépassant supérieurement du bord de la plaque d'attelage.
La figure 5 représente, vu de côté, le dispositif selon l'invention. La figure 6 représente l'un des deux T composant l'accessoire porte-vélo.
La figure 7 représente, vu de côté, l'accessoire porte-vélo en place sur le porte-bagages.
La figure 8 représente l'accessoire vu de dessus.
La figure 9 représente l'élément porte-barre supplémentaire de porte-bagages de toit vu de face.
La figure 10 représente cet élément vu de côté en place sur le véhicule.

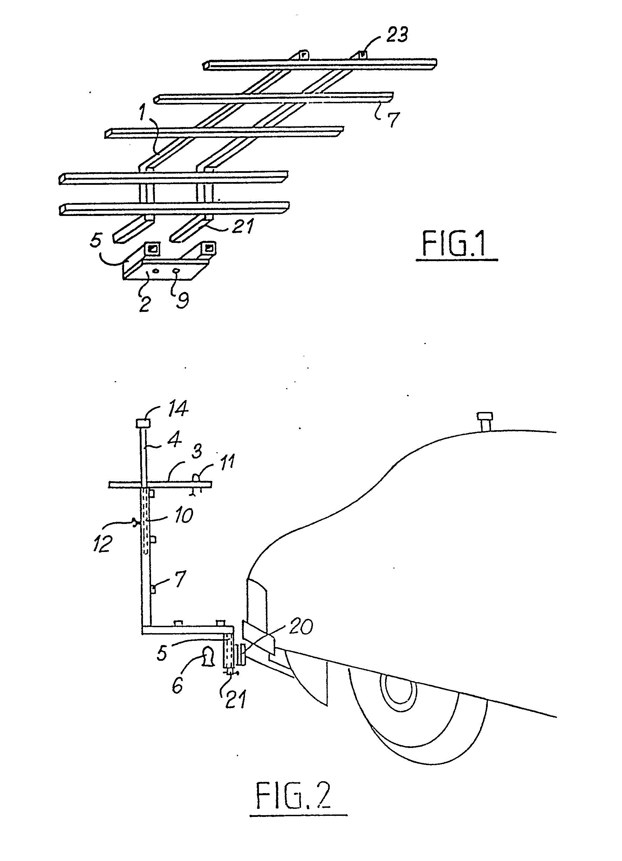

Le porte-bagages (figures 1 et 2) est constitué de tubes ou de profilés métalliques verticaux contre-coudés 1 dont une des extrémités verticales s'emboîte à coulissement doux dans l'extrémité supérieure des supports tubulaires 5 fixés verticalement sur une entretoise 2 s'adaptant directement entre la ferrure d'attelage 20 du véhicule et l'équerre 6 support de boule de romorquage.
Les tubes contre-coudés 1 sont reliés entre eux par une série d'autres tubes horizontaux 7 servant les uns de plate-frome destinée à supporter les bagages et les autres de dosseret. L'autre partie verticale des tubes contre-coudés peut recevoir à son extrémité supérieure 23 un système porte-vélos 3 et/ou un système porte-barre 4 en supplément d'un éventuel porte-bagages de toit; ces systèmes s'introduisent et coulissent à frottement doux dans les dites extrémités tubulaires 23 et peuvent être immoilisés par le moyen d'une vis d'arrêt 12.

L'entretoise 2 est placée entre la plaque 20 terminant la ferrure d'attelage solidaire de la voiture et l'équerre 6 support de boul. L'entraxe des trous de fixation 9 est le même que celui de la plaque 20 et de l'équerre 6; le tout est boulonné ensemble. L'entretoise 2 d'une largeur nettement supérieure à la plaque d'attelage de la voiture comporte des tubes verticaux 5 soudés à chacune des extrémités, de section carré ou rectangulaire, ces tubes dépassant supérieurement le bord de la plaque; ce décalage permet, le tout étant en place, d'accéder à la boule d'attelage avec une flèche de romorque.

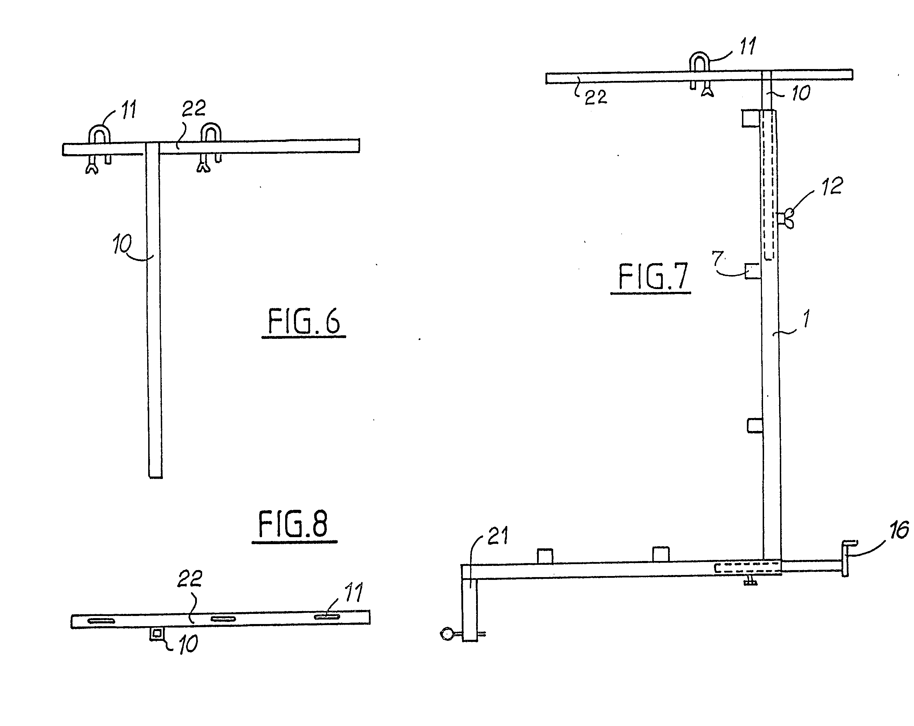

Selon la figure 5, la plaque terminale 20 de la ferrure d'attelage est solidaire de la voiture; l'entretoise 2 prend place ensuite avec ses tubes 5 soudés à chaque extrémité où viennent coulisser les tubes verticaux contre-coudés 1 goupillés ensuite en 21 pour raison de sécurité; enfin, l'équerre porte-boule 6 complémentaire de la plaque d'attelage originale 20, le tout étant boulonné ensemble dans les trous à entraxe 9.

Les figures 6 à 10 représentent des accessoires supplémentaires, soit: le porte-vélos: il est constitué (figure 6) de deux tubes en forme de T 10, 22, s'engageant à coulissement doux dans l'extrémité 23 de la partie verticale des tubes contre-coudés 1 constituant l'armature du porte-bagages. Un blocage à serrage par vis 12 permet de les régler à hauteur désirée. Chacun des deux T comporte un ou plusieurs cavaliers 11 permettant de serrer le ou le cadres du ou des vélos.

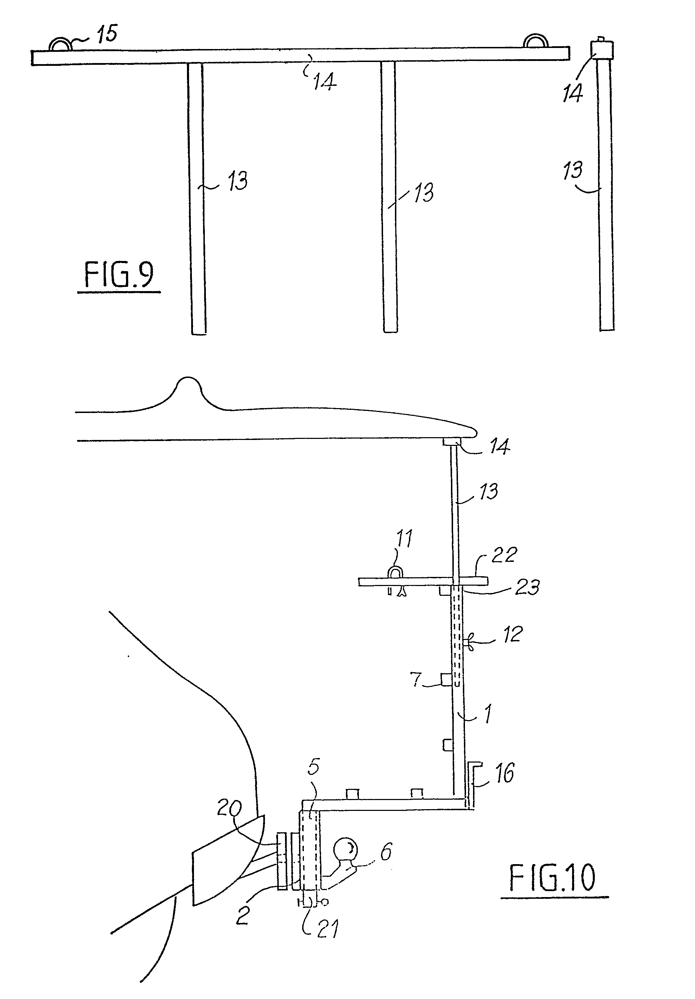

L'accessoire porte-barre supplémentaire de porte-bagages de toit; selon les figures 9 et 10, est constitué d'un portique composé de deux tubes verticaux 13 coulissant dans l'extrémité 23 de la partie verticale des tubes contre-coudés 1 constituant l'armature du porte-bagages ou dans les tubes verticaux 10 du porte-vélo si le système en est déjà pourvu de sorte que porte-vélo et porte-barre puissent être utilisés en même temps. Une barre horizontale 14 de longueur variable est soudée aux tubes verticaux 13; elle est munie d'anneaux de fixation 15. Un blocage à serrage par vis 12 permet de le régler à hauteur désirée.
Une plaque minéralogique supplémentaire 16, éclairable, est fixée en bas du porte-bagages.

## Revendications

1. Dispositif pour porter des bagages à l'arrière d'un véhicule pourvu d'une ferrure d'attelage (20) et constitué de tubes ou profilés métaliques, caractérisé en ce que des tubes contre-coudés (1) forment une ossature sur laquelle d'autres tubes (7) sont fixés perpendiculairement pour former une plate-forme et un dosseret, le segment vertical inférieur le plus court des tubes contre-coudés (1) s'engageant à coulissement dans l'extrémités supérieure de tubes metalliques verticaux (5) soudes aux extrémités d'une entretoise (2) fixée à la ferrure d'attelage (20).

2. Dispositif selon la revendication 1 caractérisé en ce que l'entretoise (2) est perforée selon un entaxe (9) correspondant à celui de la plaque d'attelage (20) et de l'équerre support de boule (6) d'attelage, se place entre ces deux dernières et se boulonne avec elles et en ce que l'entretoise (2) est de même hauteur que celle de la plaque de la ferrure d'attelage (20) mais de largeur supérieure, les tubes (5) soudés à l'entretoise faisant saillie supérieurement de la dite entretoise, ce décalage en hauteur rendant possible l'usage normal de la boule d'attelage (6) le porte-bagages étant en place.

3. Dispositif selon l'une des revendications 1 ou 2 caractérisé en ce qu'il peut recevoir un accessoire porte-vélos constitué de deux tubes soudés en forme de T, un tube vertical (10) s'engageant dans l'extrémité (23) des tubes contre-coudés du porte bagages (1) et un tube horizontal (22) étant muni de cavaliers (11) destinés à enserrer le cadre du vélo.

4. Dispositif selon la revendication 3, caractérisé en ce qu'il peut recevoir un accessoire porte-barre supplémentaire de porte-bagages de toit, constitué d'un portique formé de deux tubes verticaux (13) soudés à un tube horizontal (14), les tubes verticaux s'engageant et coulissant dans les tubes verticaux (10) du porte-vélo, le tube horizontal de longueur variable étant muni d'anneaux (15).

5. Dispositif selon les revendications 1 et 2, caractérisé en ce qu'il peut recevoir un accessoire porte-barre supplémentaire de porte-bagage de toit constitué d'un portique formé de deux tubes verticaux (13) soudés à un tube horizontal (14), les tubes verticaux s'engageant et coulissant dans les extrémités (23) des tubes contre-coudés du porte-bagage.

**Patentansprüche**

1. Halterung um Gepäck an der Hinterseite eines Wagens, der mit einer Hängerkuppel (20) ausgestattet ist, zu lagern. Sie ist charakterisiert durch Metallröhren oder Formstahl von denen die einen (1) waagerecht als Gerüst und auf denen die anderen lotrecht angebracht sind, um eine Tragefläche oder Rückverstärkung zu bilden, gebogen sind; das kürzeste Röhrenteil (1) ist für die Einschiebung vorgesehen und von oben nach unten hin in die Metallröhren (5) an den äusseren Rändern eines Stehbolzens (2) eingeschweisst.

2. Vorrichtung je nach Gebrauch, charakterisiert durch den Stehbolzen, der in Höhe des Zwischenaktes (9) der Auflage (20) und des stützenden Winkels der Hängerkugel (6) durchgebohrt ist und der sich zwischen den beiden letztgenannten einschiebt und sich mit ihnen zusammenschraubt; der höhere Stehbolzen (2), der mit der eisenbeschlagenen Auflage (20) vergleichbar ist, geht in der Breite weithin über sie hinaus; die geschweissten Röhren (5) des Stehbolzens gehen in der Höhe über die Länge des Stehbolzens hinaus, dieser Unterschied bewirkt eine Verschiebung und ermöglicht dadurch einen normalen Gebrauch der Kugel; der Gepäckträger ist somit angebracht.

3. Vorrichtung je nach beliebig gewähltem und vorher beschriebenem Gebrauch, der ein Zusatzteil erhalten kann: ein Fahrradträger, der aus zwei in T-Form geschweissten Röhren besteht; die vertikale Röhre (10) schiebt sich an der äusseren Seite (23) der gebogenen Röhren des Gepäckträgers (1) ein und die waagerechte Röhre (22) ist mit einer Abstellnadel (11) ausgestattet, die dazu bestimmt sind, den Rahmen des Fahrrades festzuhalten.

4. Vorrichtung je nach beliebig gewähltem und vorher beschriebenem Gebrauch, der ein Zusatzteil erhalten kann: eine zusätzliche Trägerstütze für einen Dachgepäckträger, der sich aus zwei senkrechten Röhren (13) in Säulenform, die beide an eine querliegende Röhre (14) geschweisst sind; die senkrechten Röhren lassen sich in die senkrechten Röhren (10) des Fahrradträgers einschieben. Die waagerechte Röhre hat ein variierbares Ausmass. Sie ist mit Ringen (15) ausgestattet, die gestatten, im Zusammenwirken mit den Trägern des Dachgepäckträgers mit grösserer Sicherheit lange Gegenstände zu transportieren, zum Beispiel: Masten, Leitern, Segelflieger, Bretter etc.

5. Vorrichtung je nach Gebrauch 1 oder 2, der als Zusatzteil nur eine weitere Stützstange für den Dachgepäckträger erhalten kann, der aus zwei senkrechten säulenförmigen Röhren (13), die an eine Auerröhre (14) angeschweisst wird, besteht; die senkrechten Röhren lassen sich in die äussere Seite der gebogenen Röhren (23) des Gepäckträgers einschieben.

**Claims**

1. Device serving to carry luggage at the back of a vehicle, equipped with fastering mounts (20) caracterized by the fact that it is composed of metal tubes or sections bent together (1) thus forming the framework on which the others (7) are fixed perpendicularly in order to form a platform or backing, the shortest of the cranked tubes (1) sliding downwards into the metal tubes welded to the ends of a cross-bar (2).

2. Device corresponding to the patent claim 1 characterized by the fact that the cross-bar (2), perforated at the space (9) between the fastering plate (20) and the angle supporting the fastering ball, is placed between these latter and is secured by them; the cross-bar (2) comparable in height to the plate of the fastering mount, is definitely wider than it, the welded tubes (5) of the cross-bar being higher than the cross-bar dimension thus causing a difference in size and making it possible to use the ball normally, once the luggage carrier is in place.

3. Device according to one of the preceding patent claims characterized by the fact that it can accomodate an accessory bicycle carrier composed two T. welded, the vertical tube (10) inserted into the end of the cranked tubes of the luggage carrier (1), the horizontal tube being (22) equipped with quadrants (11) serving to encompass the bicycle framework.

4. Device according to one of the preceding patent claims characterized by the fact that it can accomodate an accessory carrier-bar supplementary to a roof luggage carrier, composed of two vertical tubes (13) welded to a horizontal tube (14), the vertical tubes sliding into the vertical tubes (10) of the bicycle carrier. The horizontal tube of variable dimension being equipped with rings (15) means, along with the bars of the roof luggage carrier, that long objects may be transported more securely; ex: masts, ladders, planks, delta, wings etc. . .

5. Device according to the patent claims 1 and 2 characterized by the fact that it can accomodate an accessory carrier-bar supplementary to the roof luggage carrier composed of a bar of two vertical tubes (13) welded to a horizontal tube (14), the vertical tubes sliding into the ends of the cranked tubes of the luggage carrier.

FIG.1

FIG.2

FIG.3

FIG.4

FIG.5

FIG.6

FIG.8

FIG.7

FIG.9

FIG.10